# EUROPEAN PATENT APPLICATION

(11) **EP 4 588 961 A1**
(43) Date of publication of application: **23.07.2025**
(21) Application number: 24152283.8
(22) Date of filing: 17.01.2024
(51) Int. Cl.: C08J 3/24, B29C 65/00, C08G 59/22, C08G 59/50, C08J 5/04, C08J 11/10, C08K 5/09, C08K 5/17

(54) **METHOD OF MODIFYING A COMPOSITE MATERIAL OF FIBER REINFORCED POLYMER RESIN AND A METHOD OF ADHERING A PART OF A WIND TURBINE BLADE OR A NACELLE TO A SECOND SURFACE BY MEANS OF THE POLYMER RESIN**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A method of modifying a composite material of fiber reinforced polymer resin, in particular constituting a wind turbine blade, a nacelle or a part thereof, is described. The method comprises providing a composite material of fiber reinforced polymer resin, wherein the polymer resin is obtained from a resin composition comprising an epoxy component, an amine component and a (meth)acrylate component, and heating the composite material to a temperature in the range of from 150 to 200 °C. Moreover, a method of adhering a part of a wind turbine blade or a nacelle to a second surface by means of the polymer resin is described.

## Description

### Field of invention

The present invention relates to the field of wind turbine blades and nacelles, in particular to methods of modifying a composite material of fiber reinforced polymer resin constituting a wind turbine blade, a nacelle or a part thereof.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Various parts of a wind turbine, such as wind turbine blades or nacelles, are typically made of a composite material of (glass) fiber reinforced polymer resin. A conventionally used method for producing such composite material includes vacuum assisted resin transfer molding (VARTM), wherein a liquid or flowable resin is injected in a mold under application of vacuum. To this end, low viscosity resins are generally used which reduce cycle time of manufacture of parts. Moreover, recycling and reprocessing of composites becomes a more and more important topic.

Epoxy amine resins are typically used in industry as the resin starting material. The chemistry thereof is versatile for the application in wind blades and components because the mechanical properties are outstanding and the physical properties can be tuned to fit the vacuum infusion process, which requires low viscosity and long pot life, ideally still combined with fast curing. A drawback of epoxy amine resins is the reaction enthalpy and the way it is released. This can result in very high temperature in thick parts and insulated areas.

Although epoxy amine based resins offer several advantages, there are challenges in the manipulation of cured structures, the post treatment, maintenance and end of life. Conventional resin systems cannot be reshaped or joined without the use of adhesives. Also the recycling of conventional epoxy amine resins is difficult and no cost competitive method has been identified yet.

For example, if there are geometrical deviations, they must be accepted or the structure must be rebuilt, defects like delaminations or cracks must be removed and rebuilt with dedicated resins for post treatment. The same is the case for damages during operation where either overlamination or removal and rebuilding may be necessary. The end of life treatment is also difficult. There are few recycling technologies available, but those are not well suited for recycling of glass reinforced composite structures because the cost of the recycling process cost is exceeding the value of the recovered materials.

Thus, there may be a need for further improvements in epoxy amine based resins for use in the production of for wind turbine blades or other parts of a wind turbine, in particular in terms of reprocessability, recyclability and adherence.

### Summary of the Invention

This need may be met by the subject matter according to the independent claims. Advantageous embodiments of the present invention are described by the dependent claims.

According to an aspect of the invention, there is provided a method of modifying (such as thermoforming, welding, healing, repairing and/or recycling) a composite material of fiber reinforced polymer resin (constituting a wind turbine blade, a nacelle or a part thereof), the method comprising providing a composite material of fiber reinforced polymer resin, wherein the polymer resin is obtained from a resin composition comprising an epoxy component, an amine component and a (meth)acrylate component, and heating the composite material to a temperature in the range of from 150 to 200 °C (such that the composite material can be thermoformed, welded, healed, repaired and/or recycled).

According to a further aspect of the invention, there is provided a method of adhering a part of a wind turbine blade or of a nacelle to a second surface, the method comprising providing a polymer resin obtained from a resin composition comprising an epoxy component, an amine component and a (meth)acrylate component, at a first surface of a part of a wind turbine blade or a nacelle, and heating the polymer resin to a temperature in the range of from 150 to 200 °C (such that the polymer resin melts), applying (and optionally pressing together) the second surface to the first surface where at least part of the (heated) polymer resin is located.

According to a further aspect of the invention, there is provided a use of a polymer resin obtained from a resin composition comprising an epoxy component, an amine component and a (meth)acrylate component as a hot-melt adhesive.

These aspects of the invention are in particular based on the finding that the introduction of acrylates or related chemical motifs (like methacrylates or itaconates) into epoxy amine resins leads to the formation of a network with a new chemical moiety, that is formed by aza-Michael reaction of the acrylate and the amine. The aza-Michael reaction is faster than the epoxy-amine reaction and forms oligomers before these oligomers further react with the epoxy resin.

The aza-Michael reaction is reversible at increased temperature. This characteristic introduces dynamic behavior into the network. With the introduction of a carboxylic ester, also transesterification reactions with hydroxy groups from epoxy ring opening are possible. At room temperature the equilibrium lies on the side of crosslinked aza-Michael network, but at temperature above 150 C the equilibrium moves more towards the back reaction yielding acrylates and amines. A potential other reaction is the transesterification. The dynamic behavior of temperature dependent back reaction and forward reaction in equilibrium is a feature known from dissociative Covalent adaptable networks, transesterification is known from associative Covalent adaptable networks. In literature and patents several chemistries have been described offering the same properties, but have disadvantages like costly components, reduction of mechanical properties, too low Tg or increased viscosity.

The dynamic behavior of the network introduces several new properties into the composite structures of the blade or generally wind turbine components. Geometric deviations can be corrected in a thermoforming process, smaller blade parts may be pre-assembled (e.g. root segments). Small repairs of cracks may be completed by welding.

New recycling processes may be applied, that can be run under much milder conditions and are more cost friendly. Aside from the established recycling principles, recycling by thermoforming into new parts is a new option and opportunity for end of life treatment.

The present inventors have found that in epoxy-acrylate-amine chemistry already the replacement of 20 % of the epoxy part introduces some thermoformability and weldability, the most pronounced dynamic properties are observed with 50 % or more acrylates, such as 80 % or 90 % acrylates.

The low amount of acrylates in the same range as epoxy reactive diluents in conventional formulations allows for the easy implementation by replacement of the epoxy reactive diluents by similar acrylates.

Current blade infusion resin systems are typically composed of 20-30 % reactive diluents in the epoxy part to achieve a low enough viscosity for smooth infusion. The replacement of the reactive diluents by acrylates allows to keep the low viscosity and can introduce dynamic properties at the same time. Also the mechanical properties may still fulfill the requirements for the manufacture of wind blades. At a level of 20 % acrylate some reprocessability can be achieved which is enhanced with increasing acrylate content up to 50 %

It was further surprisingly found that the here presented dynamic acrylate epoxy amine resin adheres well to other surfaces, also composites based on conventional epoxy amine resins. This may be exploited for the repair of conventional blades as well as the retrofitting of blades in operation.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a method may be combined with any other exemplary embodiment of a method and with any exemplary embodiment of a use and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a method of modifying a composite material of fiber reinforced polymer resin is provided. The composite material of fiber reinforced polymer resin may be contained in or may constitute a wind turbine blade, a nacelle or a part thereof.

The term "composite material", as used herein, may in particular mean a material made from two or more constituent materials with different physical or chemical properties that, when combined in a composite material, produce a material with characteristics different from the individual components. The composite material may comprise a fiber material, such as glass fibers and/or carbon fibers, and a polymer resin.

The polymer resin is obtained from a resin composition comprising an epoxy component, an amine component and a (meth)acrylate component, which individual components will be described in further detail below. The resin composition may be suitable for use in a vacuum infusion method and may therefore also be referred to as an infusion resin. The polymer resin may however also be prepared by or used in other methods than a vacuum infusion method.

The term "composition", as used herein, may in particular mean that the components (ingredients) of the composition are in close proximity with each other and/or that the components are (intensely) mixed with each other, for instance by using a mixer, a stirrer and/or by shaking, to thereby form the composition. In particular, the components of the compositions may be uniformly distributed or dispersed throughout within the composition. The composition may be in particular semi-solid (pasty) or liquid, in particular a liquid solution or a semi-solid or liquid suspension.

The term "resin composition", as used herein, may in particular mean that the composition comprises or (substantially) consists of resins or resin components which may undergo a chemical reaction (e.g. polymerization or crosslinking reaction) with some of each other, thereby curing or hardening, typically induced by thermal energy (e.g. heating) or irradiation with electromagnetic radiation.

In the modifying method, the composite material of fiber reinforced polymer resin is heated to a temperature in the range of from 150 to 200 °C, in particular from 160 to 190 °C. At these elevated temperatures, reactions and/or back reactions, such as aza-Michael reactions, retro-aza-Michael reactions, transesterification reactions and the like, may occur in the polymer resin so that the composite material becomes pliable and can be thermoformed, welded, healed, repaired and/or recycled.

In an embodiment, the method of modifying comprises at least one of thermoforming, welding, healing, repairing and recycling the composite material of fiber reinforced polymer resin. Thus, the composite material of fiber reinforced polymer resin may be modified in a manifold manner.

In an embodiment, the method of modifying comprises a method of thermoforming the composite material of fiber reinforced polymer resin. A method of thermoforming, i.e. a thermoforming process, may allow to correct geometric deviations or defects of an already molded composite material of fiber reinforced polymer resin.

In an embodiment, the method of modifying comprises a method of welding the composite material of fiber reinforced polymer resin. In such welding method, for instance small cracks in a wind turbine blade may be repaired. Surprisingly, the polymer resin obtained from a resin composition comprising an epoxy component, an amine component and a (meth)acrylate component may not only be welded on surfaces of the same composite material, but also shows adhesion to other materials, e.g. composites based on conventional epoxy amine resin system, which is highly advantageous in that also existing parts of wind turbined based on conventional epoxy amine resin system may be welded or repaired.

In an embodiment, the method of modifying comprises a method of healing the composite material of fiber reinforced polymer resin. In such healing method, for instance small cracks or scrapes in a wind turbine blade may be repaired, in particular in a self-healing manner.

In an embodiment, the method of modifying comprises a method of repairing the composite material of fiber reinforced polymer resin.

In an embodiment, the method of modifying comprises a method of recycling the composite material of fiber reinforced polymer resin. Such method of recycling may include a thermoforming process in that used parts of a wind turbine plate or a nacelle are re-shaped by thermoforming and thereby recycled. Such method of recycling may also include a partial decomposition of the composite material, for instance under mild acidic conditions, resulting in oligomers or polymer fragments that may be used again for the production of other polymers.

In a second aspect, a method of adhering a part of a wind turbine blade or of a nacelle to a second surface is provided.

In the adhering method, a polymer resin obtained from a resin composition comprising an epoxy component, an amine component and a (meth)acrylate component, is provided at a first surface of a part of a wind turbine blade or a nacelle. The polymer resin may be applied to the first surface and/or the first surface (already) comprises the polymer resin or is made of a composite material of fiber reinforced polymer resin.

In an embodiment, the polymer resin obtained from a resin composition comprising an epoxy component, an amine component and a (meth)acrylate component may also be applied to the second surface, in addition to or instead of applying the same to the first surface.

In the adhering method, the polymer resin is heated to a temperature in the range of from 150 to 200 °C, in particular from 160 to 190 °C. At these elevated temperatures, reactions and/or back reactions, such as aza-Michael reactions, retro-aza-Michael reactions, transesterification reactions and the like, may occur in the polymer resin so that it becomes adhesive.

Subsequently, the second surface (a member to be adhered to the part of a wind turbine blade or of a nacelle and having the second surface) is applied to the first surface where at least part of the (heated) polymer resin is located. Optionally, the first and second surfaces (or the respective parts and members) may be pressed together. The second surface may be a metal, a composite material, in particular a composite material of fiber reinforced polymer resin (e.g. a conventional epoxy amine resin or an epoxy amine acrylate resin), or wood, such as balsa wood.

In a further aspect, a use of a polymer resin obtained from a resin composition comprising an epoxy component, an amine component and a (meth)acrylate component as a hot-melt adhesive is provided.

Hereinafter, further details of the resin composition are provided, which apply of course to all aspects of the present invention.

The resin composition comprises an epoxy component. The epoxy component is not particularly limited and any suitable example thereof customary in the field of epoxy-amine infusion resins may be used. The epoxy component is in particular characterized in that it comprises one or more epoxide functional groups.

In an embodiment, the epoxy component is selected from the group consisting of glycidyl ethers, glycidyl esters, glycidyl amines, divinylbenzene dioxide, cycloaliphatic epoxides, and combinations thereof.

The resin composition also comprises an amine component. The amine component is not particularly limited and any suitable example thereof customary in the field of epoxy-amine infusion resins may be used. The amine component is in particular characterized in that it comprises one or more amine functional groups.

In an embodiment, the amine component is selected from the group consisting of aliphatic polyamines, arylaliphatic polyamines, cycloaliphatic polyamines, alkanolamines, polyetherpolyamines, and combinations thereof.

The resin composition also comprises a (meth)acrylate component. The (meth)acrylate component is in particular characterized in that it comprises one or more (meth)acrylate functional groups. An acrylate component, i.e. comprising one or more acrylate functional groups, is preferred, but a methacrylate component, i.e. comprising one or more methacrylate functional groups, may also be used. It may also be possible to use a mixed (meth)acrylate component comprising one or more acrylate functional groups and one or more methacrylate functional groups.

A "(meth)acrylate" encompasses an acrylate and/or a methacrylate. The terms "acrylate" and "methacrylate" as used herein, correspond to the generally accepted meanings thereof. An acrylate may be represented by the general formula "H₂C=CH-C(=O)-" and a methacrylate may be represented by the general formula "H₂C=C(CH₃)-C(=O)-". An acrylate may also encompass an itaconate.

In an embodiment, the (meth)acrylate component comprises one, two, three, four or more (meth)acrylate functional groups.

In an embodiment, the (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate, dimethyl itaconate, dibutyl itaconate, pentaerythritol tetraacrylate, tricyclo[5.2.1.0(2,6)]decanedimethanol diacrylate and combinations thereof.

In an embodiment, a molar ratio of the (meth)acrylate component is in a range of from 10 to 50 mol% and a molar ratio of the epoxy component is in a range of from 50 to 90 mol%, each per 100 mol% of the amine component. In other words, per 100 mol% of the amine component, the resin composition may comprise 50 to 90 mol% of the epoxy component and 10 to 50 mol% of the (meth)acrylate component. The sum of the epoxy component and the (meth)acrylate component may in particular amount to 100 mol%. It might also be possible that the amine component is contained in excess compared to the sum of the epoxy component and the (meth)acrylate component. For instance, the composition may also comprise 100 to 200 mol% of the amine component, 50 to 90 mol% of the epoxy component and 10 to 50 mol% of the (meth)acrylate component.

In an embodiment, a molar ratio of the (meth)acrylate component to the epoxy component is in a range of from 1:9 to 1:1, in particular in a range of from 1:5 to 1:2.

In a nutshell, with simple modification of an epoxy amine resin system with (meth)acrylates the resin system shows some viscous flow at high temperatures. Depending on the desired process - thermoforming, welding, healing - the process window will be 150-200 °C. Interestingly it was found, that the new resin system can be welded not only onto surfaces consisting of the same or similar composition, but also shows adhesion to other materials, e.g. composites based on conventional epoxy amine resin system.

The weldability and healability allows new manufacturing processes with a more modular approach for assembling blades, but also new methods of repairing blades. In both cases a combination of conventional, or more generally non-dynamic resin systems and the new dynamic epoxy-acrylate-amine.

Also upon end of life and decommissioning the new resin system offers several advantages. New recycling methods are possible using large thin laminates for thermoforming them into new parts. When grinded to a powder, the powder can be fused to new shapes and parts in a thermoplastic-like process. The chemical recycling is easier than for conventional epoxy amine resins.

While the present invention has been described in detail by way of specific embodiments and examples, it should be appreciated the invention is not limited thereto and various alterations and modifications are possible, without departing from the scope of the invention.

## Claims

1. A method of modifying a composite material of fiber reinforced polymer resin, the method comprising:
providing a composite material of fiber reinforced polymer resin, wherein the polymer resin is obtained from a resin composition comprising an epoxy component, an amine component and a (meth)acrylate component;
heating the composite material to a temperature in the range of from 150 to 200 °C.

2. The method as set forth in claim 1, wherein the method of modifying comprises at least one of thermoforming, welding, healing, repairing and recycling the composite material of fiber reinforced polymer resin.

3. The method as set forth in claim 1, wherein the method of modifying comprises a method of thermoforming the composite material of fiber reinforced polymer resin.

4. The method as set forth in claim 1, wherein the method of modifying comprises a method of welding the composite material of fiber reinforced polymer resin.

5. The method as set forth in claim 1, wherein the method of modifying comprises a method of healing the composite material of fiber reinforced polymer resin.

6. The method as set forth in claim 1, wherein the method of modifying comprises a method of repairing the composite material of fiber reinforced polymer resin.

7. The method as set forth in claim 1, wherein the method of modifying comprises a method of recycling the composite material of fiber reinforced polymer resin.

8. A method of adhering a part of a wind turbine blade or of a nacelle to a second surface, the method comprising:
providing a polymer resin obtained from a resin composition comprising an epoxy component, an amine component and a (meth)acrylate component, at a first surface of a part of a wind turbine blade or a nacelle;
heating the polymer resin to a temperature in the range of from 150 to 200 °C,
applying the second surface to the first surface where at least part of the polymer resin is located.

9. The method as set forth in any one of the preceding claims, wherein the epoxy component is selected from the group consisting of glycidyl ethers, glycidyl esters, glycidyl amines, divinylbenzene dioxide, cycloaliphatic epoxides, and combinations thereof.

10. The method as set forth in any one of the preceding claims, wherein the amine component is selected from the group consisting of aliphatic polyamines, arylaliphatic polyamines, cycloaliphatic polyamines, alkanolamines, polyetherpolyamines, and combinations thereof.

11. The method as set forth in any one of the preceding claims, wherein the (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidlyether, trimethylolpropane triacrylate, dimethyl itaconate, dibutyl itaconate, pentaerythritol tetraacrylate, tricyclo[5.2.1.0(2,6)]decanedimethanol diacrylate and combinations thereof.

12. The method as set forth in any one of the preceding claims, wherein a molar ratio of the (meth)acrylate component is in a range of from 10 to 50 mol% and a molar ratio of the epoxy component is in a range of from 50 to 90 mol%, each per 100 mol% of the amine component.

13. Use of a polymer resin obtained from a resin composition comprising an epoxy component, an amine component and a (meth)acrylate component as a hot-melt adhesive.
